# FASCICULE DE BREVET EUROPEEN

(11) **EP 2 029 379 B1**
(45) Date de publication et mention de la délivrance du brevet: **07.12.2011**
(21) Numéro de dépôt: 07731324.5
(22) Date de dépôt: 19.04.2007
(51) Int. Cl.: B60H 1/34

(54) **SYSTEME DE VENTILATION FORCEE DE L'HABITACLE D'UN VEHICULE AUTOMOBILE, ET PLANCHE DE BORD CORRESPONDANTE**
ZWANGSLÜFTUNGSSYSTEM FÜR DEN INNENRAUM EINES KRAFTFAHRZEUGS UND ENTSPRECHENDES ARMATURENBRETT
FORCED VENTILATION SYSTEM FOR THE PASSENGER COMPARTMENT OF AN AUTOMOBILE, AND CORRESPONDING INSTRUMENT PANEL

(30) Priorité: 16.06.2006 FR 0605391
(43) Date de publication de la demande: 04.03.2009
(73) Titulaire: Faurecia Interieur Industrie, 92000 Nanterre (FR); BOURBON AUTOMOBILE, 39170 Saint Lupicin (FR)
(72) Inventeur: GUERREIRO, Pierre, 95210 Saint Gratien (FR); BOURBON, Claude, 39360 Molin (FR)
(74) Mandataire: Jacobson, Claude
(86) Numéro de dépôt international: PCT/FR2007/000660
(87) Numéro de publication internationale: WO 2007/144478

(56) Documents cités:
- WO-A-93/18931
- DE-A1- 10 331 398
- DE-U- 1 958 423

## Description

La présente invention concerne un système de ventilation forcée de l'habitacle d'un véhicule automobile, du type décrit dans le préambule de la revendication 1. Le document WO-A-93/18931 et document DE 1958 423 décrit un système de ce type.

Les systèmes de ventilation usuels comprennent des aérateurs débouchant dans l'habitacle du véhicule. Chaque aérateur est généralement muni d'ailettes fixes ou mobiles permettant d'orienter le flux d'air dans une direction particulière.

Ces aérateurs, notamment lorsqu'ils débouchent par la planche de bord, s'intègrent mal au décor de celle-ci et sont Inesthétiques.

De plus, quand les aérateurs sont montés mobiles, il existe une ligne de jeu autour de chaque aérateur. Cette ligne de jeu a également un caractère inesthétique.

Les aérateurs à grille fixe aval améliorent l'aspect esthétique, mais les solutions connues ne sont pas optimales en ce qui concerne la directivité du flux d'air.

L'invention a pour but de fournir un système de ventilation qui améliore l'aspect esthétique sans nuire de façon substantielle à la directivité de l'aérateur ni introduire une perte de charge substantielle.

A cet effet, l'invention a pour objet un système de ventilation du type précité, caractérisé par la partie caractérisante de la revendication 1.

Des modes particuliers de réalisation du système de ventilation sont décrits dans les revendications 2 à 11.

L'invention concerne également une planche de bord de véhicule automobile comprenant un système de ventilation tel que défini ci-dessus.

L'invention sera mieux comprise à la lecture de la description qui va suivre, donnée uniquement à titre d'exemple, et faite en se référant aux dessins, sur lesquels :
- la figure 1 est une vue schématique de face d'un exemple de planche de bord comprenant un système de ventilation selon l'invention ;
- la figure 2 est une vue schématique en perspective d'un aérateur d'un système de ventilation selon l'invention pouvant être intégré à la planche de bord de la figure 1;
- les figures 3 à 6 sont des vues schématiques de face de quatre exemples de grille fixe d'un système de ventilation.

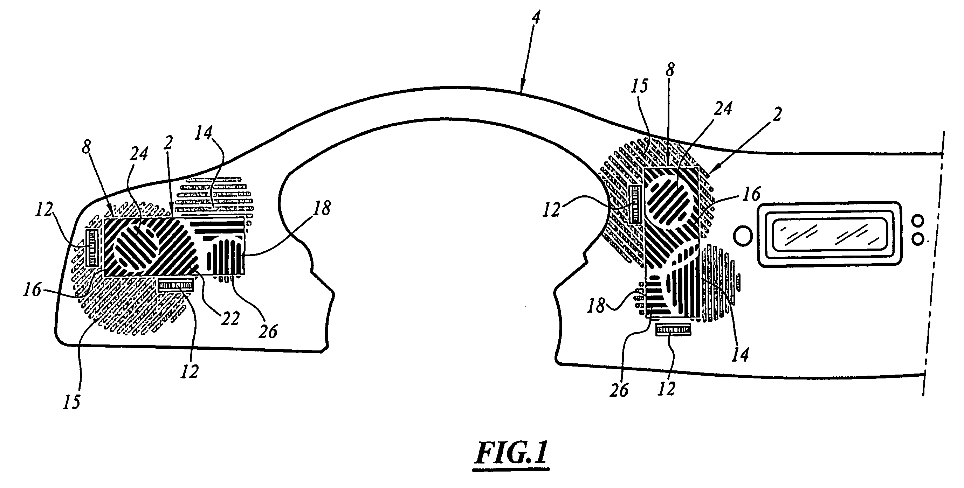

Dans le mode de réalisation de la figure 1, le système de ventilation selon l'invention comprend une pluralité d'aérateurs 2 intégrés à la planche de bord 4 du véhicule. Chaque aérateur 2 guide et oriente un flux d'air produit en amont par le système de ventilation et débouche dans l'habitacle du véhicule. Deux aérateurs sont visibles sur la figure 1.

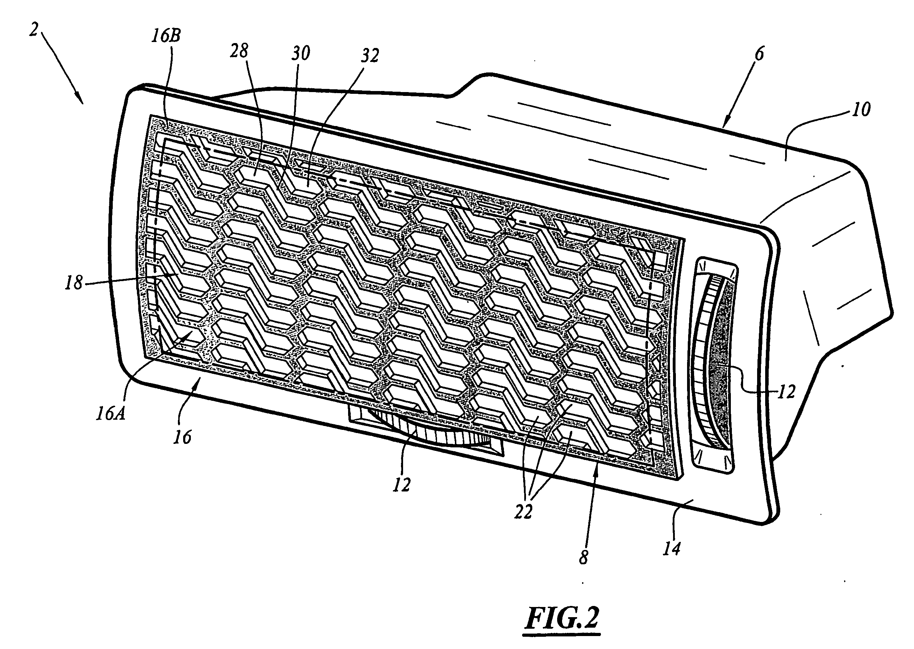

Dans l'exemple de la figure 2. chaque aérateur 2 comprend un boîtier amont 6 de guidage, d'occultation et/ou d'orientation du flux d'air, et une grille fixe 8 en aval du corps 10 du boîtier 6. La grille 8 est fixe par rapport à l'habitacle du véhicule.

Le boîtier 6 est un boîtier classique de type connu. Il est par exemple muni d'ailettes mobiles, d'une ou de plusieurs buses mobiles, ou de tout autre moyen d'orientation du flux d'air traversant le boîtier 6.

Comme illustré à la figure 2, le boîtier 6 comprend également deux molettes 12 de type connu, montées rotatives sur le corps 10 du boîtier tout en faisant saillie vers l'habitacle. Les molettes 12 sont reliées à la timonerie du boîtier 6 pour actionner par exemple des ailettes mobiles, des buses mobiles, tout autre moyen mobile de guidage d'air, ou encore un volet d'occultation du flux d'air. Il est cependant par exemple possible de remplacer les molettes 12 par des moyens de commande électriques.

Dans l'exemple de la figure 2, la grille fixe 8, insérée dans un contour de support 14 du boîtier 6. comprend une région active 16 dans laquelle sont ménagées des ouvertures 18 pour le passage de l'air à travers la grille 8. La région 16 comprend elle-même une région courante 16A à ouvertures 18 toutes identiques et une région marginale 16B non perforée ou avec des ouvertures de configurations différentes.

Dans le mode de réalisation illustré à la figure 1, le contour de support 14 comprend des ouvertures 18 similaires aux ouvertures 18 ménagés dans la région courante 16A de la grille 8. Ainsi, l'aspect esthétique de l'aérateur est amélioré.

De plus, le contour de support 14 se prolonge en bandeau décor de la planche de bord 4. L'aspect esthétique de ce bandeau décor est alors adapté à l'aspect de la grille afin que l'emplacement des aérateurs 2 se trouve masqué. Le bandeau décor peut s'étendre dans les directions et sur les distances désirées à partir de la grille, pour obtenir des effets esthétiques désirés très variés pour l'ensemble de la planche de bord. Ainsi, dans l'exemple de la figure 1, deux aérateurs voisins de la zone compteur sont associés chacun à quatre régions circulaires 15 de différents diamètres qui chevauchent les aérateurs ou sont inclues dans ceux-ci.

Toutes les grilles fixes 8, leurs contours 14 et le bandeau décor sont par exemple moulés d'une seule pièce dans un matériau plastique pour constituer le revêtement visible de la planche de bord, ou une partie de celui-ci. En variante, chaque pièce moulée peut ne constituer qu'une grille 8 avec son contour 14 et le bandeau décor correspondant.

L'aérateur 2 peut comprendre une pluralité d'ailettes mobiles de type connu. Ces ailettes permettent d'orienter le flux d'air avec une bonne directivité et sans induire de perte de charge substantielle. La grille fixe 8 masque ces ailettes.

Les ailettes mobiles peuvent être espacées de la grille 8. Ainsi, la grille 8 est libérée de contraintes mécaniques par rapport aux ailettes. La géométrie de la grille fixe 8 peut alors être choisie indépendamment de la géométrie des ailettes mobiles.

Dans les divers modes de réalisation de l'invention, les ouvertures 18 de la région courante 16A de la grille 8 définissent un grand nombre de tronçons 22 allongés suivant au moins deux directions, les deux directions formant de préférence entre elles un angle supérieur ou égal à 45°.

La surface de passage globale des tronçons 22 orientés suivant une première direction est avantageusement sensiblement égale à la surface de passage globale des tronçons 22 orientés suivant une deuxième direction différente. Ainsi, l'influence de la grille 8 sur la directivité du flux d'air est minimisée.

Différentes géométries de grille 8 envisagées sont illustrées aux figures 1 à 6.

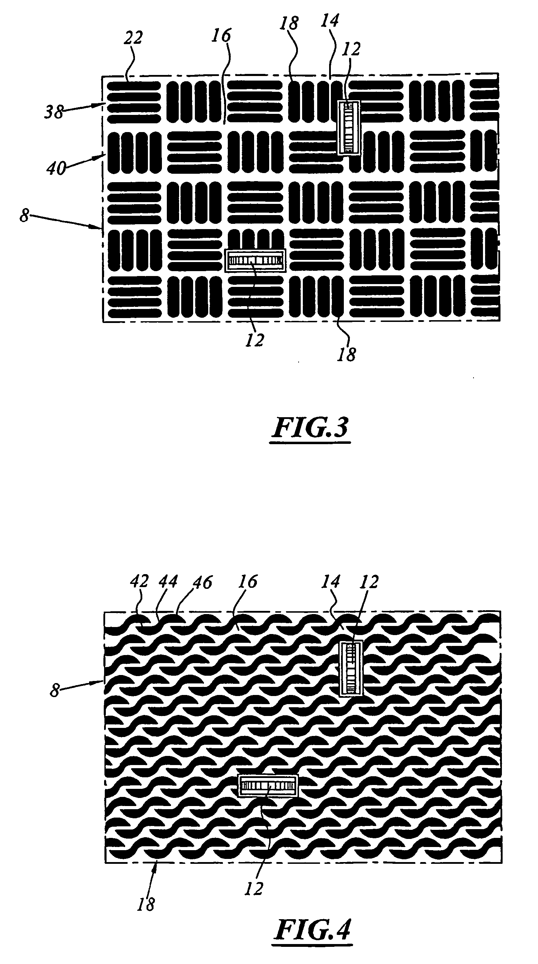

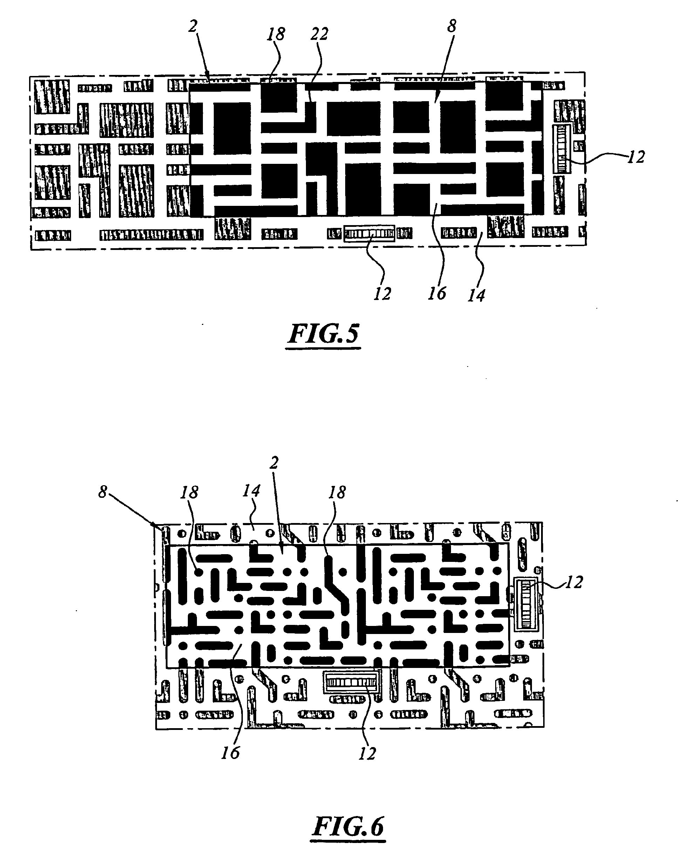

Les figures 1 et 6 donnent des exemples avec des tronçons suivant trois directions formant entre elles des angles d'environ 45° et de 90°. Les figures 2 et 4 donnent des exemples avec deux directions formant un angle d'environ 45°. Les figures 3 et 5 donnent des exemples avec deux directions formant un angle de 90°.

De préférence, la surface totale de passage desdites ouvertures 18 dans la région courante 16A de la grille 8 est supérieure ou égale à 50% de la surface de cette région courante 16A. Ainsi, la grille 8 n'induit pas de perte de charge substantielle sur le flux d'air traversant la grille 8.

De préférence, la largeur des tronçons 22 est supérieure ou égale à 2 mm et la longueur des tronçons 22 est supérieure ou égale à 3 mm. La perte de charge éventuellement induite par la grille 8 sur le flux d'air est ainsi minimisée. La directivité du flux d'air est quant à elle améliorée sans pour autant nuire à l'aspect esthétique de la grille 8 et à sa fonction de masque de l'amont de l'aérateur 2.

Dans un mode de réalisation préféré, sensiblement tout tronçon 22 s'étendant suivant une direction est adjacent à un tronçon 22 s'étendant suivant une autre direction. La directivité du flux d'air est ainsi améliorée. Ces tronçons adjacents peuvent être séparés ou communiquer au sein d'une même ouverture 18.

Dans le mode de réalisation illustré à la figure 6, l'aérateur 2 comprend également des ouvertures 18 sensiblement circulaires dont le diamètre moyen est supérieur ou égal à 3 mm.

Chaque ouverture 18 de la grille 8 illustrée à la figure 1 est formée par un unique tronçon 22 sensiblement rectangulaire. Les ouvertures 18 sont arrangées par groupes de façon à définir des motifs en forme de cercles 24 ou de secteurs de cercles 26, inclus dans le contour rectangulaire de chaque grille. Comme décrit plus haut, les secteurs de cercle se prolongent dans le bandeau décor pour former des cercles complets, éventuellement tronqués par d'autres cercles.

Ainsi, sur la figure 1, un cercle 24 se situe entièrement en regard du corps 10 de chaque aérateur 2, ce qui n'est pas le cas des trois autres cercles, qui sont partiellement en regard du corps 10 et partiellement dans le bandeau décor.

La géométrie de la grille 8 illustrée à la figure 2 est essentiellement formée, dans la région courante 16A, d'un motif unique d'ouverture 18 se répétant. Cette ouverture 18, en forme générale de Z allongé, comprend un premier tronçon oblong horizontal 28, un deuxième tronçon oblong oblique 30 et un troisième tronçon oblong horizontal 32. Les tronçons 28, 30, 32 ont une largeur comprise entre 2 mm et 10 mm. Les tronçons horizontaux 28, 32 ont une longueur comprise entre 3 mm et 40 mm. Le tronçon oblique 30 a une longueur sensiblement égale à la longueur des tronçons horizontaux 28, 32. Le tronçon oblique 30 forme avec les tronçons horizontaux 28, 32, un angle compris entre 25° et 90°.

La figure 3 illustre une géométrie de grille 8 formée, dans la région courante 16A, de deux motifs répétitifs 38, 40 sensiblement carrés. Un premier motif 38 comporte quatre ouvertures 18 allongées horizontales sensiblement rectangulaires dont les extrémités longitudinales sont arrondies. Un second motif 40 comporte quatre ouvertures 18 allongées verticales d'une forme identique à celles du premier motif 38. Les motifs 38 et 40 sont disposés alternativement et de façon adjacente suivant les directions horizontales et verticales.

Le côté des motifs 38 et 40 est compris entre 3 mm et 80 mm.

La largeur des ouvertures 18 est comprise entre 2 mm et 10 mm.

La figure 4 illustre un autre exemple de géométrie possible. Les ouvertures 18 de la grille fixe 8 répètent un motif unique en forme de S allongé comprenant essentiellement trois tronçons. Un premier tronçon horizontal en croissant 42, un tronçon intermédiaire 44 incliné à environ 45°, et un deuxième tronçon horizontal en croissant 46. Le tronçon intermédiaire relie une extrémité du premier tronçon 42 à une extrémité du deuxième tronçon 46. L'ouverture 18 présente un centre de symétrie se trouvant sensiblement au centre du tronçon intermédiaire 44. La largeur du tronçon intermédiaire 44 est comprise entre 2 mm et 10 mm. La largeur moyenne des tronçons en croissant 42 et 46 est comprise entre 2 mm et 10 mm.

La figure 5 illustre un exemple dans lequel les ouvertures 18 sont formées d'un ou de plusieurs tronçons 22 sensiblement rectangulaires ou carrés de tailles différentes. Ces tronçons confèrent aux ouvertures 18 une forme rectangulaire, carrée ou en L. La largeur des tronçons rectangulaires 22 est comprise entre 2 mm et 10 mm et leur longueur est comprise entre 3 mm et 80 mm.

La figure 6 illustre des ouvertures 18 formées de tronçons 22 variés : des tronçons rectangulaires horizontaux, obliques et verticaux. Ainsi, les ouvertures ont des formes rectangulaires en S allongé ou en Z allongé, en L, en T ou en F. La grille comprend en sus des ouvertures 18 sensiblement circulaires. Le diamètre moyen des ouvertures 18 circulaires est compris entre 3 mm et 10 mm.

Les ouvertures 18 allongées ont, dans les exemples illustrés aux figures 1 à 6, une section transversale identique sur toute leur longueur et sur l'épaisseur de la grille 8. Il serait cependant possible de prévoir que certaines ouvertures 18 au moins s'élargissent ou se rétrécissent suivant leur longueur pour former des ouvertures 18 convergentes ou divergentes. En variante, la section de ces ouvertures peut se réduire et/ou s'élargir suivant l'épaisseur de la grille.

Avec l'invention, on comprend que l'aspect esthétique du système de ventilation est amélioré sans nuire à la directivité du flux d'air de façon substantielle et sans induire de perte de charge de ce flux de façon substantielle. De plus, l'invention permet un grand choix dans l'aspect esthétique créé pour la planche de bord.

## Revendications

1. Système de ventilation forcée de l'habitacle d'un véhicule automobile, du type comprenant un aérateur (2) guidant au moins un flux d'air vers l'habitacle, l'aérateur (2) comprenant une grille (8) fixe aval masquant l'amont de l'aérateur, la grille (8) comprenant, dans sa région courante (16A), des ouvertures (18) qui définissent un grand nombre de tronçons (22, 28, 30, 32, 42, 44, 46) allongés, ces tronçons étant orientés suivant au moins deux directions différentes, **caractérisé en ce que** deux desdites directions forment entre elles un angle supérieur ou égal à 45°, et **en ce que** sensiblement tout tronçon (22, 24, 28, 30, 32, 42, 44, 46) s'étendant suivant l'une desdites deux directions est adjacent à un tronçon (22, 28, 30, 32, 42, 44, 46) s'étendant suivant une autre desdites deux directions.

2. Système de ventilation selon la revendication 1, **caractérisé en ce que** lesdites deux directions forment entre elles un angle de 90°.

3. Système de ventilation selon la revendication 1 ou 2, **caractérisé en ce que** la surface de passage globale des tronçons (22, 28, 30, 32, 42, 44, 46) orientés suivant une première direction est sensiblement égale à la surface de passage globale des tronçons (22, 28, 30, 32, 42, 4.4, 46) orientés suivant une deuxième direction.

4. Système de ventilation selon l'une quelconque des revendications précédentes, **caractérisé en ce que** la surface totale de passage desdites ouvertures (18) dans ladite région courante (16A) est supérieure ou égale à 50% de la surface de ladite région courante (16A).

5. Système de ventilation selon l'une quelconque des revendications précédentes, **caractérisé en ce que** lesdits tronçons (22, 28, 30, 32, 42, 44, 46) ont une largeur supérieure ou égale à 2 mm et une longueur supérieure ou égale à 3 mm.

6. Système de ventilation selon l'une quelconque des revendications précédentes, **caractérisé en ce que** l'aérateur (2) comprend également des ouvertures (18) sensiblement circulaires, le diamètre moyen desdites ouvertures (18) circulaires étant supérieur ou égal à 3 mm.

7. Système de ventilation selon l'une quelconque des revendications précédentes, **caractérisé en ce que** au sein d'une même ouverture (18), un tronçon (22, 24, 28, 30, 32, 42, 44, 46) s'étendant suivant une direction communique avec un tronçon adjacent (22, 24, 28, 30, 32, 42, 44, 46) s'étendant suivant une autre direction.

8. Système de ventilation selon l'une quelconque des revendications précédentes, **caractérisé en ce que** la géométrie de la grille (8) est essentiellement formée d'un motif unique d'ouverture (18) se répétant.

9. Système de ventilation selon l'une quelconque des revendications précédentes, **caractérisé en ce que** les ouvertures (18) ont des formes en S allongé, en Z allongé, en L, en T ou en F.

10. Système de ventilation selon l'une quelconque des revendications précédentes, **caractérisé en ce que** ladite grille (8) se prolonge avec un motif d'ouvertures (18) analogue en bandeau décor d'une planche de bord (4) du véhicule l'aérateur

11. Système de ventilation selon l'une quelconque des revendications précédentes, **caractérisé en ce que** l'aérateur (2) comprend des moyens d'orientation du flux d'air, par exemple une ailette ou une buse, en amont de ladite grille (8), lesdits moyens d'orientation du flux d'air étant espacés de ladite grille (8).

12. Planche de bord (4) de véhicule automobile, **caractérisée en ce qu'**elle comporte un système de ventilation selon l'une quelconque des revendications précédentes.

## Claims

1. System for the forced ventilation of a motor vehicle cabin, of the type comprising a ventilator (2) guiding at least one air flow to the cabin, the ventilator (2) comprising a downstream fixed grille (8) masking the upstream part of the ventilator, the grille (8) comprising, in its main region (16A), openings (18) that define a large number of elongate portions (22, 28, 30, 32, 42, 44, 46), these portions being oriented in at least two different directions, **characterised in that** two of said directions form between them an angle greater than or equal to 45°, and **in that** substantially every portion (22, 24, 28, 30, 32, 42, 44, 46) extending in one of said two directions is adjacent to a portion (22, 28, 30, 32, 42, 44, 46) extending in another of said two directions.

2. Ventilation system according to claim 1, **characterised in that** said two directions form between them an angle of 90°.

3. Ventilation system according to claim 1 or 2, characterised sin that the total passage surface of the portions (22, 28, 30, 32, 42, 44, 46) oriented in a first direction is substantially equal to the total passage surface of the portions (22, 28, 30, 32, 42, 44, 46) oriented in a second direction.

4. Ventilation system according to any one of the preceding claims, **characterised in that** the total passage surface of said openings (18) in said main region (16A) is greater than or equal to 50% of the surface of said main region (16A).

5. Ventilation system according to any one of the preceding claims, **characterised in that** said portions (22, 28, 30, 32, 42, 44, 46) have a width greater than or equal to 2 mn and a length greater than or equal to 3 mm .

6. Ventilation system according to any one of the preceding claims, **characterised in that** the ventilator (2) also comprises substantially circular openings (18), the mean diameter of said circular openings (18) being greater than or equal to 3 mm.

7. Ventilation system according to any one of the preceding claims, **characterised in that**, within the said opening (18), a portion (22, 24, 28, 30, 32, 42, 44, 46) extending in one direction communicates with an adjacent portion (22, 24, 28, 30, 32, 42, 44, 46) extending in another direction.

8. Ventilation system according to any one of the preceding claims, **characterised in that** the geometry of the grille (8) is substantially formed by a single opening pattern (18) repeating itself.

9. Ventilation system according to any one of the preceding claims, **characterised in that** the openings (18) have shapes in an elongate S, an elongate Z, an L, a T or an F.

10. Ventilation system according to any one of the preceding claims, **characterised in that** said grille (8) is extended with a similar pattern of openings (18) in a decorative facia of a vehicle dashboard (4).

11. Ventilation system according to any one of the preceding claims, **characterised in that** the ventilator (2) comprises means of orienting the air flow, for example a fin or a nozzle, upstream of said grille (8), said means of orienting the air flow being spaced apart from said grille (8).

12. Motor vehicle dashboard (4), **characterised in that** it comprises a ventilation system according to any one of the preceding claims.

## Patentansprüche

1. Zwangslüftungssystem für den Innenraum eines Kraftfahrzeuges, der Art mit einem Lüfter (2), der zumindest einen Luftstrom zum Innenraum hin führt, wobei der Lüfter (2) ein stromabwärts liegendes festes Gitter (8) aufweist, welches den stromaufwärts liegenden Bereich des Lüfters abdeckt, wobei das Gitter (8) in seinem Durchströmbereich (16A) Öffnungen (18) aufweist, welche eine große Anzahl lang gezogener Teilstücke (22, 28, 30, 32, 42, 44, 46) definieren, wobei diese Teilstücke gemäß zumindest zwei unterschiedlicher Richtungen ausgerichtet sind, **dadurch gekennzeichnet, dass** zwei dieser Richtungen miteinander einen Winkel bilden, der größer oder gleich 45° ist, und dass praktisch jedes Teilstück (22, 24, 28, 30, 32, 42, 44, 46), welches sich gemäß einer der beiden Richtungen erstreckt, an ein Teilstück (22, 24, 28, 30, 32, 42, 44, 46) angrenzt, welches sich gemäß einer anderen der beiden Richtungen erstreckt.

2. Lüftungssystem gemäß Anspruch 1, **dadurch gekennzeichnet, dass** die beiden Richtungen zwischen sich einen Winkel von 90° ausbilden.

3. Lüftungssystem gemäß Anspruch 1 oder 2, **dadurch gekennzeichnet, dass** die gesamte Durchgangsfläche der gemäß einer ersten Richtung ausgerichteten Teilstücke (22, 24, 28, 30, 32, 42, 44, 46) praktisch gleich der gesamten Durchgangsfläche der gemäß einer zweiten Richtung ausgerichteten Teilstücke (22, 24, 28. 30, 32, 42, 44, 46) ist.

4. Lüftungssystem gemäß irgendeinem der vorherigen Ansprüche, **dadurch gekennzeichnet, dass** die gesamte Durchgangsfläche der Öffnungen (18) in dem Durchströmbereich (16A) größer oder gleich 50% der Oberfläche des Durchströmbereiches (16A) beträgt.

5. Lüftungssystem gemäß irgendeinem der vorherigen Ansprüche, **dadurch gekennzeichnet, dass** die Teilstücke (22, 24, 28, 30, 32, 42, 44, 46) eine Breite aufweisen, die größer oder gleich 2 mm ist, und eine Länge, die größer oder gleich 3 mm ist.

6. Lüftungssystem gemäß irgendeinem der vorherigen Ansprüche, **dadurch gekennzeichnet, dass** der Lüfter (2) ebenfalls praktisch kreisförmige Öffnungen (18) aufweist, wobei der mittlere Durchmesser dieser kreisförmigen Öffnungen (18) größer oder gleich 3 mm ist.

7. Lüftungssystem gemäß irgendeinem der vorherigen Ansprüche, **dadurch gekennzeichnet, dass** innehalb einer selben Öffnung (18) ein Teilstück (22, 24, 28, 30, 32, 42, 44, 46), das sich gemäß einer Richtung erstreckt, mit einem angrenzenden Teilstück (22, 24, 28, 30, 32, 42, 44, 46), das sich gemäß einer anderen Richtung erstreckt, in Verbindung steht.

8. Lüftungssystem gemäß irgendeinem der vorherigen Anspruche, **dadurch gekennzeichnet, dass** die Geometrie des Gitters (8) im Wesentlichen von einem sich wiederholenden einzigen Öffnungsmotiv (18) gebildet ist.

9. Lüftungssystem gemäß irgendeinem der vorherigen Ansprüche, **dadurch gekennzeichnet, dass** die Öffnungen (18) lang gezogene S-Formen, lang gezogene Z-Formen, L-, T- oder F-Formen aufweisen.

10. Lüftungssystem gemäß irgendeinem der vorherigen Ansprüche, **dadurch gekennzeichnet, dass** sich das Gitter (8) mit einem Öffnungsmuster (18) ausdehnt, welches analog zu einem Zierband eines Armaturenbrettes (4) des Fahrzeugs ausgebildet ist.

11. Lüftungssystem gemäß irgendeinem der vorherigen Ansprüche, **dadurch gekennzeichnet, dass** der Lüfter (2) Vorrichtungen zur Ausrichtung des Luftstromes, beispielsweise einen Flügel oder eine Düse, stromaufwärts von dem Gitter (8) aufweist, wobei die Vorrichtungen zur Ausrichtung des Luftstromes von dem Gitter (8) beabstandet angeordnet sind.

12. Armaturenbrett (4) für Kraftfahrzeug, **dadurch gekennzeichnet, dass** es ein Lüftungssystem gemäß irgendeinem der vorherigen Ansprüche aufweist.
